# EUROPÄISCHE PATENTSCHRIFT

(11) **EP 1 418 191 B1**
(45) Veröffentlichungstag und Bekanntmachung des Hinweises auf die Patenterteilung: **02.03.2011**
(21) Anmeldenummer: 03025088.0
(22) Anmeldetag: 03.11.2003
(51) Int. Cl.: C08G 8/38, C09D 163/00

(54) **Bindemittel und ihre Anwendung als Beschichtungsmaterial für die Beschichtung von Metallbehältern**
Binder and its use as a coating material for coating metallic containers
Liant et son application comme matière de revêtement afin de revêtir des récipients métalliques

(30) Priorität: 11.11.2002 DE 10252627
(43) Veröffentlichungstag der Anmeldung: 12.05.2004
(73) Patentinhaber: Cytec Surface Specialties Germany GmbH & Co. KG, 65203 Wiesbaden (DE)
(72) Erfinder: Brindöpke, Gerhard Dr., 65843 Sulzbach (DE); Etz, Oliver, 65510 Hünstetten (DE); Oberressl, Paul, 65187 Wiesbaden (DE); Wixmerten, Bodo Dr., 64572 Büttelborn (DE)
(74) Vertreter: Deckers, Hellmuth Alexander

(56) Entgegenhaltungen:
- GB-A- 949 713
- DATABASE CHEMABS CHEMICAL ABSTRACTS SERVICE, COLUMBUS, OHIO, US; 1998, SAITO, N. ET AL.: "Resol-type phenolic resins free of low molecular weight components and their compositions for solvent-type water-thinned coatings" XP002271108 & JP 10 120760 A (TOTO KASEI KK) 12. Mai 1998 (1998-05-12)
- DATABASE WPI Section Ch, Week 198831 Derwent Publications Ltd., London, GB; Class A21, AN 1988-215541 XP002271121 & JP 63 150317 A (KANSAI PAINT CO LTD) 23. Juni 1988 (1988-06-23)
- DATABASE WPI Section Ch, Week 198244 Derwent Publications Ltd., London, GB; Class A21, AN 1982-93757E XP002271120 & JP 57 155226 A (MATSUSHITA ELECTRIC WORKS LTD) 25. September 1982 (1982-09-25)

## Beschreibung

Die Erfindung betrifft Bindemittel, ihre Herstellung und Anwendung insbesondere im Bereich der Innenlackierung von Metallverpackungen.

Es ist bekannt, daß Phenolharze in der Chemikalienresistenz, in der Wasser- und Lösungsmittelbeständigkeit und in der Korrosionsbeständigkeit von anderen Kunstharzen kaum zu übertreffen sind (Ullmann's Encyclopedia of Industrial Chemistry, Paints and Coatings, Vol. A18, (1991), S. 418). Speziell auf dem Gebiet der Innenschutzlacke für die Lackierung von Metallverpackungen aus Weißblech, Aluminium und Stahlblech haben sich hitzehärtbare Phenolharze hervorragend bewährt.

Innenbeschichtungen von Behältern, die der Aufbewahrung von Getränken und Nahrungsmitteln dienen sollen, haben vor allem die Aufgabe, die Verpackung vor Korrosion durch das Füllgut zu schützen und umgekehrt das Füllgut gegen die Einwirkung von Metallionen und der damit verbundenen Geschmacksbeeinträchtigung zu bewahren.

Eine möglichst porenfreie Filmbildung, eine ausreichende Härte, Flexibilität und Kratzfestigkeit sowie Haftfestigkeit und Sterilisationsbeständigkeit sind weitere wichtige Eigenschaften, die Innenschutzlackierungen haben müssen.

Des weiteren unterliegt die Zusammensetzung des Beschichtungsmaterials den gesetzlichen Reglementierungen des deutschen Bundesgesundheitsamtes bzw. der in den USA gültigen FDA-Zulassung (21 CFR § 175.300 - Regelung).

Phenolharze können jedoch, um dem Anforderungsprofil an eine Innenbeschichtung gerecht zu werden, nicht als Alleinbindemittel eingesetzt werden. Bisher werden die Phenolharze nur in Gegenwart von elastifizierenden Harzen, insbesondere Epoxidharzen, eingesetzt.

So sind aus dem Patent GB 949 713 A modifizierte härtbare Phenol-Formaldehydharze bekannt, die durch Umsetzung von mehrwertigen Phenolen oder Novolaken mit Epoxidverbindungen und anschließende Reaktion mit Formaldehyd oder einem Formaldehydspender hergestellt werden. Die japanische Offenlegungsschrift JP 63-150 317 A betrifft die Umsetzung von Reaktionsprodukten von Epoxidharzen und Bisphenolen mit Formaldehyd im alkalischen. Aus der Offenlegungsschrift JP 10-120 760 sind mit Formaldehyd alkylolierte Phenolresole bekannt, die zur Doseninnenbeschichtung verwendet werden.

Aus der Literatur ist bekannt, daß zur Plastifizierung bzw. Flexibilisierung von Phenolharzen höhermolekulare Epoxidharze vom Typ 7 bzw. 9 verwendet werden. Diese Typen von Epoxidharzen zeigen neben einer guten Haftung auf Stahl, Weißblech, Aluminium und anderen gängigen Behältermaterialien, gegenüber verdünnten Säuren (z.B. Essigsäure, Milchsäure, Kohlensäure) und Schwefel gute Beständigkeit. Daneben sind sie pasteurisations- und sterilisationsfest. Die verwendeten Epoxidharze vom Typ 7 bzw. 9 enthalten jedoch Massenanteile von jeweils bis zu 5 % BADGE (Bisphenol A-Diglycidyläther) und freies Bisphenol A. Diese beiden Verbindungen sind jedoch gesundheitlich nicht unbedenklich. Des weiteren benötigen diese Lacksysteme für eine ausreichende Härtung, die zu der für den Lackfilm geforderten ausreichenden Beständigkeit z.B. gegen Lösungsmittel führt, hohe Einbrenntemperaturen und lange Härtungszeiten. Wünschenswert sind daher für den Anwender reaktivere Bindemitielsysteme.

Es besteht daher die Aufgabe, Bindemittel für die Beschichtung von Metallbehälter bereitzustellen, die unter anderem als Alleinbindemittel verwendet werden können und welche die vorstehenden Nachteile nicht oder zumindest nur in vermindertem Umfang aufweisen.

Die Aufgabe wird gelöst durch Kondensationsprodukte gemäß den Ansprüchen 1 bis 6 und Mischungen von Kondensationsprodukten gemäß Anspruch 7, wobei die Kondensationsprodukte gemäß den Verfahren der Ansprüche 8 bis 10 hergestellt werden können und entsprechend den Ansprüchen 11 bis 13 zu verwenden sind.

Überraschenderweise wurde gefunden, daß durch Umsetzung mit Aldehyden alkylolierte und zumindest teilweise verätherte alkylolierte Kondensationsprodukte aus Dihydroxyaromaten mit Di- oder Polyepoxiden, gegebenenfalls unter Mitverwendung von Mono- oder Polyhydroxyaromaten, diese vorteilhaften Eigenschaften besitzen. Diese Bindemittel können dabei als Alleinbindemittel eingesetzt werden, sie können aber auch mit weiteren üblichen Bindemitteln kombiniert und gemeinsam gehärtet werden.

Gegenstand der Erfindung sind daher Kondensationsprodukte aus Dihydroxyaromaten **A,** gegebenenfalls in Mischung mit Mono- oder Polyhydroxyaromaten **C,** mit Di- oder Polyepoxiden **B,** die durch Umsetzung mit Aldehyden **D** alkyloliert, bevorzugt methyloliert, und mit Alkoholen E zumindest teilweise veräthert sind.

Die Mono- und Polyhydroxyaromaten **C,** die für die vorliegende Erfindung geeignet sind, sind ausgewählt aus den einwertigen ein- und mehrkernigen Phenolen **C1** und aromatischen Verbindungen **C3** mit mehr als zwei Hydroxylgruppen, die jeweils an ein aromatisches

Kohlenstoffatom gebunden sind, sowie den Alkylidenpolyphenolresolen oder -novolaken **Cx** mit mehr als zwei freien phenolischen Hydroxylgruppen.

Geeignete Dihydroxyaromaten **A** sind ein- und mehrkernige aromatische Verbindungen, die zwei Hydroxylgruppen aufweisen, wie Brenzkatechin, Hydrochinon, Resorcin, die isomeren Dihydroxynaphthaline, insbesondere das 1,8-, das 2,3- und das 2,6-Isomer, Dihydroxydiphenyl, Dihydroxydiphenyläther, Dihydroxydiphenylsulfon und Dihydroxybenzophenon. Ebenso geeignet sind Alkyliden-bisphenole **A1** wie Bisphenol A, Bisphenol F oder Resole oder Novolake **A11** (Alkylidenpolyphenolresole bzw. Alkylidenpolyphenolnovolake) mit zwei freien phenolischen OH-Gruppen. Als Alkylidenpolyphenolresole oder -novolake können alle Polyphenole eingesetzt werden, deren Grundgerüst aus phenolischen Körpern und Oxoverbindungen hergestellt wurde.

Geeignete dreiwertige Phenole **C3** sind beispielsweise Pyrogallol, Hydroxyhydrochinon oder Trisphenol TC (α, α' α"- Tris-(4-hydroxyphenyl)-1,3,5-triisopropylbenzol), unter die Gruppe **C3** fallen auch phenolische Verbindungen mit mehr als drei Hydroxylgruppen wie Apionol (1,2,3,4-Tetrahydroxybenzol) und 1,2,4,5-Tetrahydroxybenzol.

Die Herstellung der Alkylidenpolyphenolresole oder -novolake **Cx** erfolgt durch (Co-) Kondensation von einwertigen, gegebenenfalls alkylsubstituierten Phenolen **C1,** und/oder mehrwertigen Phenolen **C3** oder deren Gemischen mit Aldehyden **D,** die im allgemeinen 1 bis 12, vorzugsweise 1 bis 9 und insbesondere 1 oder 2 Kohlenstoffatome aufweisen, in Gegenwart von sauren oder basischen Katalysatoren. Als Beispiele für die einwertigen Phenole **C1** seien hier genannt: Phenol, o-, m-, p-Kresol, 3,5-Dimethylphenol, 1,3,4-Xylenol, p-Phenylphenol und Alkylphenole, wie p-tert.-Butylphenol, Octylphenol oder Nonylphenol. Unter den Aldehyden **D** wird vorzugsweise Formaldehyd eingesetzt. Daneben kommen auch Acetaldehyd, Propionaldehyd, Butyraldehyd, Isobutyraldehyd, Valeraldehyd, Hexyl-, Heptyl-, Octyl-, Nonyl- und Decylaldehyd und ihre Isomeren in Frage.

Die eingesetzten Alkylidenpolyphenolresole oder -novolake **Cx** weisen zahlenmittlere molare Massen Mₙ von 250 bis 1500 g/mol und mittlere Kondensationsgrade.von größer als 2 bis zu 10 auf.

Als Komponente **A** können sowohl die einzelnen Verbindungen als auch Gemische eingesetzt werden.

Es ist erfindungsgemäß ebenfalls möglich, zunächst die Umsetzung der Verbindungen **A** und **B** vorzunehmen, und anschließend Alkylidenpolyphenolresole oder-novolake **Cx** zuzumischen, bevor die Umsetzung mit dem Aldehyd **D** durchgeführt wird. In diesem Fall beträgt das Verhältnis der Masse an Alkylidenpolyphenolresolen oder -novolaken **Cx** zur Summe der Massen von **Cx** und der anfangs eingesetzten Komponente **A** 5 bis 40 %, bevorzugt 10 bis 30 %.

Es ist weiter erfindungsgemäß, Monophenole **C1** und/oder Polyhydroxyaromaten **C3** in Mischung mit den Dihydroxyaromaten **A** einzusetzen, wobei der Massenanteil der Monophenole **C1** und/oder der Polyhydroxyaromaten **C3** von 3 % bis 30 %, bevorzugt von 5 bis 20 % und insbesondere von 5 bis 15 % an der Summe der Massen der phenolischen Verbindungen beträgt.

Als geeignete Di- oder Polyepoxidharze **B** kommen eine Vielzahl der hierfür bekannten Verbindungen in Betracht, die im Mittel mehr als eine Epoxidgruppe, vorzugsweise zwei Epoxidgruppen, pro Molekül enthalten. Diese Epoxidverbindungen **B** (Epoxidharze) können dabei sowohl gesättigt als auch ungesättigt, sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche. Vorzugsweise handelt es sich dabei um Glycidyläther mehrwertiger Phenole oder mehrwertiger Alkohole, deren spezifische Gehalte an Epoxidgruppen von 0,5 bis 6,7 mol/kg, bevorzugt 1,00 bis 5,5 mol/kg ("Epoxidäquivalentgewichte" zwischen 150 und 2000, insbesondere jedoch zwischen 180 und 1000 g/mol) liegen.

Der spezifische Epoxidgruppengehalt ist definiert als der Quotient der Stoffmenge an Epoxidgruppen *n*(EP) und der Masse *m*_{B} der Substanz (und ist damit der Kehrwert des sog. "EV-Wertes" oder "Epoxid-Äquivalentgewichts" (EEW)); die übliche Maßeinheit ist "mol/kg".

Es können als Komponente **B** auch Polyglycidyläther von Polyalkoholen verwendet werden, wie z.B. Äthylenglykol-1,2-diglycidyläther, Propandiol-1,2-diglycidyläther, Propandiol-1,3-diglycidyläther, Butandiol-1,4-diglycidyläther, Pentandiol-1,5-diglycidyläther, Neopentylglykoldiglycidyläther, Hexandiol-1,6-diglycidyläther, Diäthylenglykoldiglycidyläther,Dipropylenglykoldiglycidyläther, höhere Polyoxyalkylenglykoldiglycidyläther, wie z. B. höhere Polyoxyäthylenglykoldiglycidyläther und Polyoxypropylenglykoldiglycidyläther, Mischpolyoxyäthylen-propylenglykoldiglycidyläther, Polyoxytetramethylenglykoldiglycidyläther, Polyglycidyläther des Glycerins, Trimethylolpropans, Trimethyloläthans, Pentaerythrits, Sorbitols, Polyglycidyläther von oxalkylierten Polyolen (wie z. B. von jeweils oxalkyliertem Glycerin, Trimethylolpropan, Pentaerythrit u. a.), Diglycidyläther des Cyclohexandimethanols, Bis-(4-hydroxycyclohexyl)methans und2,2-Bis-(4-hydroxycyclohexyl)propans, Polyglycidyläther des Rizinusöls und Triglycidyl-tris-(2-hydroxyäthyl)-isocyanurat. Vorzugsweise werden Polyoxypropylenglykoldiglycidyläther mit einem spezifischen Epoxidgruppengenhalt von 1,25 bis 6,67 mol/kg, insbesondere 2,5 bis 3,33 mol/kg ("Epoxidäquivalentgewicht" von 150 bis 800, insbesondere von 300 bis 400 g/mol), eingesetzt.

In besonderen Fällen können zusätzlich zu den Polyglycidyläthern **B** geringe Mengen reaktiver Verdünner (Monoepoxidverbindungen) **B1,** wie z. B. Methylglycidyläther, Butylglycidyläther, Allylglycidyläther, Äthylhexylglycidyläther, langkettige aliphatische Glycidyläther, wie z. B. Cetylglycidyläther und Stearylglycidyläther, Monoglycidyläther von höheren isomeren Alkoholgemischen, Glycidyläther einer Mischung von C₁₂- bis C₁₃-Alkoholen, Phenylglycidyläther, Kresylglycidyläther, p-tert.-Butylphenylglycidyläther, p-Octylphenylglycidyläther, p-Phenylphenylglycidyläther, Glycidyläther eines oxalkylierten Laurylalkohols in Massenanteilen bis zu 30 %, vorzugsweise 10 bis 20 %, bezogen auf die Masse der Polyglycidyläther, mitverwendet werden.

Weiterhin kommen für die Komponente **B** in Frage Poly-(N-glycidyl)-Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, N,N'-Diglycidylderivate von Cycloalkylenharnstoffen und Diglycidylderivate von Hydantoinen und andere.

Weiterhin können auch Polyglycidyläther von Polycarbonsäuren als Komponente **B** eingesetzt werden, die man durch die Umsetzung von Epichlorhydrin oder ähnlichen Epoxidverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure, und mit mehrbasigen organischen Säuren wie .. z. B. dimerisierter oder trimerisierter Linolensäure, erhält. Beispiele sind Adipinsäurediglycidylester, Phthalsäurediglycidylester und Hexahydrophthalsäurediglycidylester. In manchen Fällen kann es auch vorteilhaft sein, Glycidylestergruppen-haltige Copolymerisate als Epoxidkomponente einzusetzen, die durch Copolymerisation von z.B. Glycidyl(meth)acrylat mit anderen (Meth)Acrylsäureestern oder durch Copolymerisation mit Styrol erhalten werden. Eine ausführliche Aufzählung der geeigneten Epoxidverbindungen findet sich in dem Handbuch "Epoxidverbindungen und Epoxidharze" von A. M. Paquin, Springer Verlag, Berlin 1958, Kapitel IV, und in Lee, Neville "Handbook of Epoxide Resins", 1967, Kapitel 2. Weitere geeignete Harze werden beispielsweise in den Dokumenten EP-A 0 272 595 und 0 286 933 genannt. Es können auch Mischungen von mehreren Epoxidharzen B verwendet werden.

Zur Herstellung der erfindungsgemäßen Bindemittel werden die Dihydroxyaromaten **A** in Gegenwart eines Katalysators mit den Di- oder Polyepoxiden **B** im ersten Schritt in der Art umgesetzt, daß das Verhältnis der Stoffmenge von phenolischen OH-Gruppen in **A** zu der der Epoxidgruppen in **B** größer als 1 mol/mol ist. Gegebenenfalls können bei dieser Umsetzung auch Monophenole **C1,** wie sie z.B. zur Herstellung der Alkylidenpolyphenole genannt wurden, und/oder Polyhydroxyaromaten **C3** und/oder **Cx**, mitverwendet werden. Auch dabei ist das Verhältnis der Summen der Stoffmengen von phenolischen OH-Gruppen in **A** und **C** zu der Stoffmenge der Epoxidgruppen in **B** stets größer als1.

Katalysatoren für diese Umsetzung sind hinlänglich aus dem Bereich der Epoxidharzherstellung bekannt, beispielhaft seien hier genannt: Alkali- und Erdalkalimetall-hydroxide, -alkoholate und - phenolate, tertiäre Amine wie Dimethylaminoäthanol, Dimethylbenzylamin oder Tributylamin, Phosphonium- oder Ammoniumsalze, und Phosphine.

Die so erhaltenen, freie phenolische Gruppen tragenden Kondensationsprodukt des ersten Schritts werden in einem zweiten Umsetzungsschritt mit Aldehyden **D,** die im allgemeinen 1 bis 12, vorzugsweise 1 bis 9 und insbesondere 1 oder 2 Kohlenstoffatome aufweisen, in Gegenwart von Katalysatoren derart zur Reaktion gebracht, daß das gebildete Umsetzungsprodukt vorzugsweise freie Alkylol-, bevorzugt Methylol-, oder Alkylenäther-, bevorzugt Methylenäthergruppen, gegebenenfalls auch Alkylen-, bevorzugt Methylengruppen, enthält. Die Aldehyde **D** können gleich oder verschieden sein von den oben unter **D** genannten. Während dieser Umsetzung können wiederum Alkylidenbisphenole **A1,** Resole oder Novolake **A11** und/oder Alkylidenpolyphenolresole oder -novolake Cx zugesetzt werden.

Unter den Aldehyden **D** wird vorzugsweise Formaldehyd eingesetzt. Daneben kommen hier auch Acetaldehyd, Propionaldehyd, Butyraldehyd, Isobutyraldehyd, Valeraldehyd, Hexyl-, Heptyl-, Octyl-, Nonyl- und Decylaldehyd und ihre Isomeren in Frage. Das Verhältnis der Stoffmenge von Aldehyd **D** zur Summe der Stoffmengen der endständigen phenolischen OH-Gruppen in den Kondensationsprodukten des ersten Schritts ist dabei größer als 1 mol/mol, vorzugsweise 1 bis 3 mol/mol, und insbesondere 1 bis 2,5 mol/mol

Als Katalysatoren werden dabei vorzugsweise Alkali- oder Erdalkalimetall-Hydroxide oder -Carbonate, Ammoniak oder Amine wie Hexamethylentetramin oder Dimethylaminoäthanol verwendet. Verwendbar sind aber alle aus der Phenolharzchemie bekannten Katalysatoren für die Bildung von Resolen.

Das so erhaltene alkylolierte Produkt des zweiten Schritts wird in einem weiteren dritten Schritt mit Alkoholen **E** zu Bindemitteln in Form von Alkyloläthern, bevorzugt Methyloläthern, umgesetzt. Geeignete Alkohole **E** sind beispielsweise Äthanol, n- und iso-Propanol, n- und iso-Butanol sowie die isomeren Pentanole und Hexanole, Butylglykol und besonders Methanol.

Die Verwendung der erfindungsgemäßen Bindemittel erfolgt mit Vorteil in plastifizierter oder elastifizierter Form im Gemisch mit einer weichmachenden Substanz ausgewählt aus der Gruppe der Epoxidharze, der Polyvinylacetale, der Polyvinylalkohole, der Alkydharze, der Polyester, der fetten Öle, der Polyurethane und der Kautschuke, insbesondere Acrylnitrilkautschuk, oder dergleichen üblichen plastifizierenden Substanzen. Die Elastifizierung mit Epoxidharzen wird selbstverständlich nur dann angewandt, wenn die Freiheit von Epoxyverbindungen keine Rolle spielt.

Als geeignete weichmachende bzw. elastifizierende Epoxidharze kommen eine Vielzahl der hierfür bekannten Verbindungen in Betracht, die im Mittel mehr als eine Epoxidgruppe, vorzugsweise zwei Epoxidgruppen, pro Molekül enthalten. Eine Auswahl dieser Verbindungen wurde schon bei der Herstellung der erfindungsgemäßen Bindemittel genannt.

Als Polyvinylacetale eignen sich z.B. Polyvinylbutyral, Polyvinylpropional oder dergleichen.

Als fette Öle bzw. deren Fette kommen beispielsweise Leinöl, Leinölfettsäure, Sojaöl, Sojaölfettsäure, Sonnenblumenöl, Cashewnußschalenöl oder dergleichen in Frage.

Geeignete Alkydharze bzw. Polyester sind beispielsweise solche auf Basis von Phthalsäure, Maleinsäure, Isophthalsäure, Terephthalsäure und Trimellithsäure, ferner von natürlichen vorkommenden Ölen oder Fetten, wie beispielsweise den oben genannten, weiterhin von den entsprechenden Fettsäuren und deren Estern, insbesondere den Glycerinestern dieser Säuren.

Als Alkoholkomponente der Alkydharze bzw. Polyester finden insbesondere zweiwertige Alkohole wie Äthylenglykol, Propandiol-1,2 oder -1,3, die verschiedenen Butandiole, Oxalkylierungsprodukte des 4,4'-Dihydroxydiphenylpropans, Dimethylolcylohexan, dreiwertige Alkohole wie Glycerin, Trimethyloläthan oder- propan, und höherwertige Alkohole wie Pentaerythrit Anwendung.

Es können auch Gemische der genannten Zusätze eingesetzt werden, z.B. Epoxid- und Polyesterharze. Es ist auch möglich, die erfindungsgemäßen Phenolharze in Form von Präkondensaten mit diesen elastifizierenden bzw. weichmachenden Zusätzen zu kombinieren. Besonders vorteilhaft ist hierbei die Kombination mit Epoxidharz.

Das Massenverhältnis der weichmachenden bzw. elastifizierenden Substanzen zu den erfindungsgemäßen Bindemitteln beträgt in der Regel 1 : 99 bis 50 : 50, vorzugsweise 1 : 99 bis 30 : 70.

Als übliche Zusatzstoffe, die eventuell in der erfindungsgemäßen Mischung vorhanden sein können, seien beispielsweise die üblichen Lackadditive, wie Pigmente, Pigmentpasten, Antioxydantien, Verlauf- bzw. Verdickungsmittel, Entschäumer und/oder Netzmittel, Reaktivverdünner, Füllstoffe, Härtungskatalysatoren, Härter und weitere härtbare Harze genannt.

Diese Zusatzstoffe können der härtbaren Mischung gegebenenfalls erst unmittelbar vor der Verarbeitung zugegeben werden. Zur Beschleunigung der Vernetzungsreaktion können Katalysatoren, insbesondere Säuren, wie zum Beispiel Phosphorsäure, eingesetzt werden.

Die härtbaren Bindemittel gemäß der Erfindung eignen sich besonders für die Innenlackierung von Lebensmittel- oder Getränkedosen, wobei sie infolge ihrer Freiheit von Bisphenol A und BADGE nach dem heutigen Stand als lebensmittelunbedenklich einzustufen sind. Des weiteren werden bei der Vernetzung physiologisch bedenkliche Substanzen wie Phenol und Formaldehyd nicht oder nur in Spuren (weniger als 0,1 % der Masse des Bindemittels bzw. der Bindemittelmischung) freigesetzt.

Daneben können die erfindungsgemäßen Bindemittel auch zur Herstellung von Überzügen für andere Anwendungsgebiete, wie zur Verbesserung der Haftung von Fasern zum Beispiel an Gummi sowie als Imprägniermittel für poröse oder fasrige Substrate eingesetzt werden.

Die Abscheidung erfolgt auf dem Substrat, wie Metall, Holz, Glas, Beton, Kunststoff, Keramik etc., nach herkömmlichen Methoden, wie Rakeln, Streichen, Spritzen, Tauchen oder Aufwalzen. Die Überzüge werden durch Erhitzen auf 100 bis 260 °C für eine zum Aushärten ausreichende Zeit, im allgemeinen etwa fünf Minuten bis etwa 30 Minuten, gehärtet.

In den nachfolgenden Beispielen wird die Erfindung näher erläutert. Dabei bedeuten "Teile" stets Massenteile. Angaben in "%" sind stets Massenanteile (cg/g oder g/(100 g)), Konzentrationsangaben in "%" sind das Verhältnis der Masse des gelösten Stoffes, bezogen auf die Masse der Lösung oder der Mischung.

### Beispiele

### I Herstellung der Bindemittel

### 1 Herstellung von Bindemittel 1

215 Teile eines Diglycidyläthers von Bisphenol A (spezifischer Epoxidgruppengehalt 5,26 mol/kg; "Epoxidäquivalentgewicht" 190 g/mol) und 168 Teile Bisphenol A wurden in 100 Teilen Xylol gelöst und auf 130 °C erhitzt. Nach Zugabe von 0,5 Teilen Triphenylphosphin wurde solange nachgerührt, bis der spezifische Epoxidgruppengehalt weniger als 0,1 mol/kg betrug (Epoxidäquivalentgewicht über 10.000 g/mol). Anschließend wurde mit 100 Teilen Butanol verdünnt und mit 22 Teilen wäßriger Natronlauge (33 %ig) versetzt. Bei 70 °C wurden dann 55 Teile wäßrige Formaldehydlösung (37 %ig) zugesetzt und 5 h nachgerührt. Nach Zugabe von 480 Teilen Butanol und nach Einstellung eines pH-Wertes von 3,5 mit 50 %iger Schwefelsäure wurde 15 h über einen Wasserabscheider im Umlauf destilliert. Anschließend wurde soviel Lösungsmittel abdestilliert, bis ein Trockenrückstand (Trocknen während 1 h bei 135 °C) von 60 % erreicht worden war. Die Harzlösung wurde dann filtriert.

### 2 Herstellung von Bindemittel 2

215 Teile eines Diglycidyläthers von Bisphenol A (spezifischer Epoxidgruppengehalt 5,26 mol/kg; "Epoxidäquivalentgewicht" 190 g/mol), 20 Teile o-Kresol und 168 Teile Bisphenol A wurden in 100 Teilen Xylol gelöst und auf 130 °C erhitzt. Nach Zugabe von 0,5 Teilen Triphenylphosphin wurde solange nachgerührt, bis der spezifische Epoxidgruppengehalt weniger als 0,1 mol/kg betrug (Epoxidäquivalentgewicht über 10.000 g/mol). Anschließend wurde mit 100 Teilen Butanol verdünnt und mit 22 Teilen wäßriger Natronlauge (33 %ig) versetzt. Bei 70 °C wurden dann 55 Teile wäßrige Formaldehydlösung (37 %ig) zugesetzt und 5 h nachgerührt. Nach Zugabe von 480 Teilen Butanol und nach Einstellung eines pH-Wertes von 3,5 mit 50 %iger Schwefelsäure wurde 15 h über einen Wasserabscheider im Umlauf destilliert. Anschließend wurde soviel Lösungsmittel abdestilliert, bis ein Trockenrückstand (Trocknen während 1 h bei 135 °C) von 60 % erreicht worden war. Die Harzlösung wurde dann filtriert.

### 3 Herstellung von Bindemittel 3

215 Teile eines Diglycidyläthers von Bisphenol A (spezifischer Epoxidgruppengehalt 5,26 mol/kg; "Epoxidäquivalentgewicht" 190 g/mol) und 168 Teile Bisphenol A wurden in 100 Teilen Xylol gelöst und auf 130 °C erhitzt. Nach Zugabe von 0,5 Teilen Triphenylphosphin wurde solange nachgerührt, bis der spezifische Epoxidgruppengehalt weniger als 0,1 mol/kg betrug (Epoxidäquivalentgewicht über 10.000 g/mol). Anschließend wurde mit 100 Teilen Butanol verdünnt, mit 30 Teilen einer 60 %igen Lösung eines Phenolnovolaks (gewichtsmittlere molare Masse M_{w} 750 g/mol) und mit 22 Teilen wäßriger Natronlauge (33 %ig) versetzt. Bei 70 °C wurden dann 55 Teile einer wäßrigen Formaldehydlösung (37 %ig) zugesetzt und 5 h nachgerührt. Nach Zugabe von 480 Teilen Butanol und nach Einstellung eines pH-Wertes von 3,5 mit 50 %iger Schwefelsäure wurde 15 h über einen Wasserabscheider im Umlauf destilliert. Anschließend wurde soviel Lösungsmittel abdestilliert, bis ein Trockenrückstand (Trocknen während 1 h bei 135 °C) von 60 % erreicht worden war. Die Harzlösung wurde dann filtriert.

### 4. Herstellung von Bindemittel 4

215 Teile eines Diglycidyläthers von Bisphenol A (spezifischer Epoxidgruppengehalt 5,26 mol/kg; "Epoxidäquivalentgewicht" 190 g/mol) und 148 Teile Bisphenol A wurden in 100 Teilen Xylol gelöst, mit 30 Teilen einer 60 %igen Lösung eines Phenolnovolaks (gewichtsmittlere molare Masse M_{w} 750 g/mol) versetzt und auf 130 °C erhitzt. Nach Zugabe von 1 Teil Triphenylphosphin wurde solange nachgerührt, bis der spezifische Epoxidgruppengehalt weniger als 0,1 mol/kg betrug (Epoxidäquivalentgewicht über 10.000 g/mol). Anschließend wurde mit 100 Teilen Butanol verdünnt, und mit 22 Teilen wäßriger Natronlauge (33 %ig) versetzt. Bei 70 °C wurden dann 55 Teile wäßrige Formaldehydlösung (37 %ig) zugesetzt und 5 h nachgerührt. Nach Zugabe von 480 Teilen Butanol und nach Einstellung eines pH-Wertes von 3,5 mit 50 %iger Schwefelsäure wurde 15 h über einen Wasserabscheider im Umlauf destilliert. Anschließend wurde soviel Lösungsmittel abdestilliert, bis ein Trockenrückstand (Trocknen während 1 h bei 135 °C) von 60 % erreicht worden war. Die Harzlösung wurde dann filtriert.

### II Lacktechnische Prüfung

### Herstellung und Prüfung der Lacke

Die zu prüfenden Bindemittel wurden mit Methoxypropanol auf eine Auslaufzeit nach DIN 53211 (4 mm Auslauföffnung; 23 °C) von 40 bis 60 s eingestellt. Dabei resultierten Festkörper-Massenanteile von 40 bis 45 %. Von diesem Verdünnungsvorgang abgesehen blieben die Harze unmodifiziert.

Die erhaltenen Lösungen (Klarlacke) wurden mittels Spiralrakel auf handelsübliches verzinntes Weißblech als 25 µm dicker Naßfilm aufgetragen und bei 180 °C bzw. 200 °C für 12 Minuten in einem Umluftofen eingebrannt. Nach dem Einbrennvorgang ergab sich eine mittlere Lackauflage von 5 g/m². Die physikalischen Prüfungen erfolgten auf den erkalteten, lackierten Blechen.

Die Rezepturen sind in der Tabelle 1 zusammengefaßt:

**Tabelle 1 Rezepturen (Massen in g)**

| | | | | | |
|---|---|---|---|---|---|
| Lack Nummer | 1 | 2 | 3 | 4 | 5 |
| Bindemittel aus Beispiel | 1 | 2 | 3 | 4 | # |
| Masse des Bindemittels in g | 100,00 | 100,00 | 100,00 | 100,00 | 100,00 |
| Masse Methoxypropanol in g | 6,00 | 6,00 | 6,00 | 6,00 | 6,00 |

| | | | | | |
|---|---|---|---|---|---|
| # Vergleichs-Bindemittel: o-Kresol-Resol kondensiert mit Epoxidharz Typ 7, Massenverhältnis 30 : 70 | | | | | |

**Tabelle 2: Prüfungen und Ergebnisse**

| | | | | | |
|---|---|---|---|---|---|
| a) Einbrennbedingungen: 12 min bei 180 °C | | | | | |

| | Lack 1 | Lack 2 | Lack 3 | Lack 4 | Lack 5 |
|---|---|---|---|---|---|
| Farbton | dunkelgelb | dunkelgelb | dunkelgelb | dunkelgelb | dunkelbraun |
| Acetontest * | 100 | 100 | 100 | 100 | 40 |
| Verlauf, visuell ** | 1 | 1 | 1 | 1 | 4 |
| Gt *** | 1 | 1 | 1 | 1 | 5 |

| | | | | | |
|---|---|---|---|---|---|
| * Acetontest: ein mit Aceton getränkter Wattebausch wird mit 1000g belastet und in Doppelhüben über die lackierte Fläche bewegt, angegeben ist die Anzahl der Doppelhübe ** Bewertung: 1- glatt, gleichmäßig, bis 5 - unregelmäßig, uneben *** Gitterschnitt, bestimmt gemäß ISO 2409 | | | | | |

| | | | | | |
|---|---|---|---|---|---|
| b) Einbrennbedingungen: 12 min bei 200 °C | | | | | |

| | Lack 1 | Lack 2 | Lack 3 | Lack 4 | Lack 5 |
|---|---|---|---|---|---|
| Farbton | dunkelgelb | dunkelgelb | dunkelgelb | dunkelgelb | dunkelbraun |
| Acetontest * | 100 | 100 | 100 | 100 | 60 |
| Verlauf, visuell ** | 1 | 1 | 1 | 1 | 4 |
| Gt *** | 1 | 1 | 1 | 1 | 3 |

### Erläuterungen siehe oben

Sowohl Farbe nach dem Einbrennen als auch die lacktechnischen Eigenschaften sind bei den Bindemitteln gemäß der vorliegenden Erfindung deutlich günstiger als bei den Systemen gemäß dem Stand der Technik.

Die erfindungsgemäßen Lacke besitzen eine höhere Reaktivität als das Standardsystem, was sich auch beim Acetontest zeigt: während die erfindungsgemäßen Lacke schon bei 180 °C Einbrenntemperatur acetonfest sind, beginnt dies bei den Standardsystemen erst bei Einbrenntemperaturen von über 200 °C.

## Patentansprüche

1. Kondensationsprodukte aus Dihydroxyaromaten **A** mit Di- oder Polyepoxiden **B**, **dadurch gekennzeichnet, daß** sie durch Umsetzung mit Aldehyden D akyloliert und zumindest teilweise mit Alkoholen E veräthert sind.

2. Kondensationsprodukte nach Anspruch 1, **dadurch gekennzeichnet, daß** ihre Ausgangsprodukte neben Dihydroxyaromaten **A** und Di- oder Polyepoxiden **B** zusätzlich Mono- und/oder Polyhydroxyaromaten C umfassen.

3. Kondensationsprodukte nach Anspruch 1 oder 2, **dadurch gekennzeichnet, daß** die Alkohole E ausgewählt sind aus Methanol sowie n- und iso-Butanol.

4. Kondensationsprodukte nach Anspruch 2, **dadurch gekennzeichnet, daß** Monohydroxyaromaten **C1** in den Ausgangsprodukten enthalten sind.

5. Kondensationsprodukte nach Anspruch 2, **dadurch gekennzeichnet, daß** Polyhydroxyaromaten **C3** in den Ausgangsprodukten enthalten sind.

6. Kondensationsprodukte nach Anspruch 2, **dadurch gekennzeichnet, daß** Alkylidenpolyphenolresole oder -novolake mit mehr als zwei phenolischen Hydroxylgruppen **Cx** in den Ausgangsprodukten enthalten sind.

7. Mischungen enthaltend Kondensationsprodukte nach Anspruch 1 und Alkylidenpolyphenolresole oder Alkylidenpolyphenolnovolake **Cx.**

8. Verfahren zur Herstellung von Kondensationsprodukten gemäß Anspruch 1, umfassend die Verfahrensschritte
- Kondensation von Dihydroxyaromaten **A** mit Di- oder Polyepoxiden **B,** und
- Alkylolierung des Kondensationsprodukts durch Umsetzung mit Aldehyden **D,** und
- zumindest teilweise Verätherung mit Alkoholen **E.**

9. Verfahren zur Herstellung von Kondensationsprodukten gemäß Anspruch 2, umfassend die Verfahrensschritte
- Kondensation einer Mischung von Dihydroxyaromaten **A** und Mono- und/oder Polyhydroxyaromaten **C** mit Di- oder Polyepoxiden **B**, und
- Alkylolierung des Kondensationsprodukts durch Umsetzung mit Aldehyden D, und
- zumindest teilweise Verätherung mit Alkoholen E.

10. Verfahren nach Anspruch 8 oder 9, **dadurch gekennzeichnet, daß** die Alkohole E ausgewählt sind aus Methanol sowie n- und iso-Butanol.

11. Verwendung von Kondensationsprodukten nach Anspruch 1 zur Herstellung von Beschichtungsmitteln, Haftmitteln oder Imprägniermitteln.

12. Verwendung nach Anspruch 11, **dadurch gekennzeichnet, daß** den Kondensationsprodukten Substanzen ausgewählt aus der Gruppe der Epoxidharze, der Polyvinylacetale, der Polyvinylalkohole, der Alkydharze, der Polyester, der fetten Öle, der Polyurethane und der Kautschuke zugemischt werde.

13. Verwendung nach Anspruch 11 oder 12 zur Herstellung von Beschichtungen für die Innenseiten von Lebensmittel- oder Getrankedosen.

## Claims

1. Condensation products of dihydroxyaromatics **A** with diepoxides or polyepoxides **B** which have been alkylolated by reaction with aldehydes **D** and at least partly etherified with alcohols **E.**

2. Condensation products as claimed in claim 1, whose starting products, in addition to dihydroxyaromatics **A** and diepoxides or polyepoxides **B,** further comprise mono- and/or polyhydroxyaromatics **C.**

3. Condensation products as claimed in claim 1 or 2, wherein the alcohols **E** are selected from methanol and also n- and isobutanol.

4. Condensation products as claimed in claim 2, wherein monohydroxyaromatics **C1** are included in the starting products.

5. Condensation products as claimed in claim 2, wherein polyhydroxyaromatics **C3** are included in the starting products.

6. Condensation products as claimed in claim 2, wherein alkylidenepolyphenol resoles or novolaks having more than two phenolic hydroxyl groups **Cx** are included in the starting products.

7. A mixture comprising condensation products as claimed in claim 1 and alkylidenepolyphenol resoles or alkylidenepolyphenol novolaks **Cx.**

8. A process for preparing condensation products as claimed in claim 1 which comprises the steps of
- condensing dihydroxyaromatics **A** with diepoxides or polyepoxides **B** and
- alkylolating the condensation product by reaction with aldehydes **D** and
- at least partly etherifying with alcohols **E.**

9. A process for preparing condensation products as claimed in claim 2 which comprises the steps of
- condensing a mixture of dihydroxyaromatics **A** and mono- and/or polyhydroxyaromatics **C** with diepoxides or polyepoxides **B** and
- alkylolating the condensation product by reaction with aldehydes **D** and
- at least partly etherifying with alcohols **E.**

10. The process as claimed in claim 8 or 9, wherein the alcohols **E** are selected from methanol and also n- and isobutanol.

11. The use of condensation products as claimed in claim 1 to prepare coating, adhesion or impregnating compositions.

12. The use as claimed in claim 11, wherein substances selected from the group consisting of epoxy resins, polyvinyl acetals, polyvinyl alcohols, alkyd resins, polyesters, fatty oils, polyurethanes, and rubbers are admixed to the condensation products.

13. The use as claimed in claim 11 or 12 to produce coatings for the insides of food or drink cans.

## Revendications

1. Produits de condensation de composés dihydroxy-aromatiques A avec des di- ou poly-époxydes B, **caractérisés en ce qu'**ils sont alkylolés par une réaction avec des aldéhydes D et au moins partiellement éthérifiés avec des alcools E.

2. Produits de condensation selon la revendication 1, **caractérisés en ce que** leurs produits de départ comprennent, outre les composés dihydroxy-aromatiques A et les di- ou poly-époxydes B, des composés mono- et/ou poly-hydroxy-aromatiques C.

3. Produits de condensation selon la revendication 1 ou 2, **caractérisés en ce que** les alcools E sont choisis parmi le méthanol et les n- et iso-butanols.

4. Produits de condensation selon la revendication 2, **caractérisés en ce que** des composés monohydroxy-aromatiques C1 sont contenus dans les produits de départ.

5. Produits de condensation selon la revendication 2, **caractérisés en ce que** des composés polyhydroxy-aromatiques C3 sont contenus dans les produits de départ.

6. Produits de condensation selon la revendication 2, **caractérisés en ce que** des composés résol ou novolac d'alkylidène-polyphénol comportant plus de deux groupes hydroxyl-phénoliques Cx sont contenus dans les produits de départ.

7. Mélanges contenant des produits de condensation selon la revendication 1 et des composés résol d'alkylidène-polyphénol ou novolac d'alkylidène-polyphénol Cx.

8. Procédé de production de produits de condensation selon la revendication 1, le procédé comprenant les étapes de :
- condensation des composés dihydroxy-aromatiques A avec des di- ou poly-époxydes B, et
- alkylolation du produit de condensation par une réaction avec des aldéhydes D et
- éthérification au moins partielle avec des alcools E.

9. Procédé de production des produits de condensation selon la revendication 2, le procédé comprenant les étapes de :
- condensation d'un mélange de composés dihydroxy-aromatiques A et de composés mono- et/ou poly-hydroxy-aromatiques C avec des di- ou poly-époxydes B, et
- alkylolation du produit de condensation par la réaction avec des aldéhydes D, et
- éthérification au moins partielle, avec des alcools E.

10. Procédé selon la revendication 8 ou 9, **caractérisé en ce que** les alcools E sont choisis parmi le méthanol et les n- et iso-butanols.

11. Utilisation des produits de condensation selon la revendication 1, pour la production d'agents de revêtement, d'adhésifs ou d'agents d'imprégnation.

12. Utilisation selon la revendication 11, **caractérisée en ce que** l'on mélange aux produits de condensation, des substances choisies dans le groupe des résines époxydes, des acétates de polyvinyle, des alcools de polyvinyle, des résines d'alkyde, des polyesters, des huiles grasses, des polyuréthanes et des caoutchoucs.

13. Utilisation selon la revendication 11 ou 12, pour la production de revêtements des faces internes de boîtes pour aliments ou pour boissons.
